(19) Europäisches Patentamt / European Patent Office / Office européen des brevets

(11) **EP 4 723 354 A1**

(12) **EUROPEAN PATENT APPLICATION**

(43) Date of publication:
08.04.2026 Bulletin 2026/15

(21) Application number: 25204202.3

(22) Date of filing: 24.09.2025

(51) International Patent Classification (IPC):
H01M 50/46 (2021.01)    H01M 50/403 (2021.01)
H01M 50/42 (2021.01)     H01M 50/426 (2021.01)
H01M 50/44 (2021.01)     H01M 50/489 (2021.01)
H01M 50/494 (2021.01)    H01M 10/052 (2010.01)
H01M 10/0525 (2010.01)

(52) Cooperative Patent Classification (CPC):
H01M 50/44; H01M 10/052; H01M 10/0525;
H01M 50/403; H01M 50/42; H01M 50/426;
H01M 50/46; H01M 50/489; H01M 50/494

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(30) Priority: 26.09.2024 KR 20240131059

(71) Applicant: Samsung SDI Co., Ltd.
Yongin-si, Gyeonggi-do 17084 (KR)

(72) Inventors:
• YOU, Duckjae
  17084 Gyeonggi-do (KR)
• YANG, Hosung
  17084 Gyeonggi-do (KR)
• PARK, Changwon
  17084 Gyeonggi-do (KR)
• WOO, Jiye
  17084 Gyeonggi-do (KR)
• YUK, Seoyeon
  17084 Gyeonggi-do (KR)
• Donggeun, LEE
  17084 Gyeonggi-do (KR)

(74) Representative: Michalski Hüttermann & Partner
Patentanwälte mbB
Kaistraße 16A
40221 Düsseldorf (DE)

(54) **SEPARATOR INTEGRATED TYPE ELECTRODE, METHOD FOR MANUFACTURING THE SAME, ELECTRODE ASSEMBLY, AND RECHAREABLE LITHIUM BATTERY INCLUDING THE SAME**

(57) Disclosed are a separator-integrated type electrode, a manufacturing method thereof, and an electrode assembly and a rechargeable lithium battery including the separator-integrated type electrode, the separator-integrated type electrode including an electrode, and a polymer fiber layer on the electrode. The polymer fiber layer includes polyacrylic acid. A tensile strength of the polymer fiber layer in the MD direction is greater than or equal to about 120 kgf/cm$^2$. Air permeability of the polymer fiber layer is less than or equal to about 500 sec/100 cc.

FIG. 1

EP 4 723 354 A1

**Description**

**CROSS-REFERENCE TO RELATED APPLICATION**

This application claims priority to Korean Patent Application No. 10-2024-0131059 filed in the Korean Intellectual Property Office on September 26, 2024, the entire contents of which are incorporated herein by reference.

**BACKGROUND**

**1. Field**

A separator-integrated type electrode, a method manufacturing the separator-integrated type electrode, and an electrode assembly and a rechargeable lithium battery including the separator-integrated type electrode are disclosed.

**2. Description of the Related Art**

A separator in a rechargeable lithium battery is a type of component that is typically included in a rechargeable lithium battery. The separator isolates the positive and negative electrodes from each other while continuously maintaining ionic conductivity, thereby enabling charging and discharging of the battery.

As battery stability is advantageous, the role of separators in reducing or preventing short circuits between electrodes is a relevant issue. Commonly used polyolefin series fabrics have severe heat shrinkage at high temperatures and poor physical durability. Therefore, when an issue occurs in the battery and the internal temperature rises, the separator is likely to become deformed, and in severe cases, an explosion may occur. Therefore, improving heat resistance and shrinkage resistance related to high temperature stability is a relevant factor in separator development. In relation to improving the heat resistance of separators, there is development of nonwoven separators manufactured by processing heat-resistant polymers into fibers, ceramic separators manufactured by connecting inorganic particles using a small amount of binder, and coated separators that coat existing polyolefin or nonwoven fabrics with ceramics and binders (Korean Patent No. 10-0775310).

However, in the case of a nonwoven separator manufactured by processing into a known fiber shape, there is an issue in that the bonding between fibers is weak, the tensile strength is low, the air permeability is too low, and there is almost no adhesive strength between the electrodes.

In addition, separators are usually manufactured separately from electrodes. and require a separate process for bonding the separators to the electrodes. Simplifying the process to reduce costs and increase bonding between fibers may be advantageous.

**SUMMARY**

Some example embodiments include a separator-integrated type electrode having a polymer fiber layer that can replace a conventional separator and is integrated with an electrode active material layer, thereby reducing or eliminating the need for a separate process for combining the separator and the electrode active material layer, thereby simplifying the process, reducing costs, improving bonding between fibers, and having low heat shrinkage rate, desired or improved tensile strength, desired air permeability, and desired or improved adhesive strength to the electrode. Other example embodiments include a method for manufacturing the separator, and an electrode assembly and a rechargeable lithium battery including the separator.

Some example embodiments include a separator-integrated type electrode including an electrode and a polymer fiber layer on the electrode, wherein the polymer fiber layer includes polyacrylic acid. A tensile strength of the polymer fiber layer in the machine direction ("MD direction") is greater than or equal to about 120 kgf/cm$^2$, and air permeability of the polymer fiber layer is less than or equal to about 500 sec/100 cc.

In some example embodiments, a method for manufacturing a separator-integrated type electrode includes manufacturing a polymer fiber layer including polyacrylic acid on an electrode, dissolving a portion of the polyacrylic acid by spraying microdroplets onto the polymer fiber layer, and physically bonding and chemically imidizing the dissolved polyacrylic acid through thermal compression.

In some example embodiments, an electrode assembly including the separator-integrated type electrode is provided.

In some example embodiments, a rechargeable lithium battery including the electrode assembly is provided.

According to some example embodiments, a separator-integrated type electrode includes a polymer fiber layer that can replace an existing separator and is integrated with the electrode, so that a separate process for combining the separator and the electrode is not required, thereby simplifying the process, reducing costs, and improving bonding between fibers. At the same time, the electrode can have low heat shrinkage, desired or improved tensile strength, desired air permeability, and desired or improved adhesive strength to the electrode.

## BRIEF DESCRIPTION OF THE DRAWINGS

FIGS. 1 to 4 are cross-sectional views schematically showing a rechargeable lithium battery according to some example embodiments.
FIG. 5 is a flow chart illustrating a method of manufacturing a separator-integrated type electrode, according to example embodiments.

## DETAILED DESCRIPTION

Hereinafter, example embodiments are described in detail so that those of ordinary skill in the art can readily implement the example embodiments. However, this disclosure may be embodied in many different forms and is not construed as limited to the example embodiments set forth herein.

The terminology used herein is used to describe example embodiments only, and is not intended to limit the present disclosure. The singular expression includes the plural expression unless the context clearly dictates otherwise.

As used herein, "combination thereof" indicates a mixture, a laminate, a composite, a copolymer, an alloy, a blend, a reaction product, and the like, of the constituents.

Herein, it should be understood that terms such as "comprises," "includes," **or "have"** are intended to designate the presence of an embodied feature, number, step, element, or a combination thereof, but does not preclude the possibility of the presence or addition of one or more other features, number, step, element, or a combination thereof.

In the drawings, the thickness of layers, films, panels, regions, and the like, may be exaggerated for clarity, and like reference numerals designate like elements throughout the specification. It is understood that when an element such as a layer, film, region, or substrate is referred to as being "on" another element, the element can be "directly on" the other element, or intervening elements may also be present therebetween. In contrast, when an element is referred to as being "directly on" another element, there may be no intervening elements present.

In addition, "layer" herein includes not only a shape formed on the whole surface when viewed from a plan view, but also a shape formed on a partial surface.

The average particle diameter may be measured by a method known to those skilled in the art, for example, by a particle size analyzer, or by a transmission electron microscope (TEM) image or a scanning electron microscope (SEM) image. Alternatively, it is possible to obtain an average particle diameter value by using a dynamic light scattering method, performing data analysis, counting the number of particles for each particle size range, and calculating the average particle diameter value. Unless otherwise defined, the average particle diameter may indicate the diameter ($D_{50}$) of particles having a cumulative volume of 50 volume% in the particle size distribution. As used herein, when a definition is not otherwise provided, the average particle diameter indicates a diameter ($D_{50}$) of particles having a cumulative volume of 50 volume% in the particle size distribution that is obtained by measuring the size (diameter or major axis length) of about 20 particles at random in a scanning electron microscope (SEM) image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

### Separator-Integrated Type Electrode

Some example embodiments include a separator-integrated type electrode, including an electrode and a polymer fiber layer on the electrode. Herein, the separator-integrated type electrode indicates an electrode in which the separator and electrode are physically joined, or chemically bonded while being physically joined to form, e.g., an integrated electrode.

### Polymer Fiber Layer

The polymer fiber layer includes polyacrylic acid (PAA). The polyacrylic acid is a polymer composed of or including acrylic acid units, and includes carboxyl groups (-COOH), and as a result, an imidization process occurs along with physical bonding according to the manufacturing method described below, enabling chemical bonding, increasing molecular chain strength, and also increasing the strength of fibers within the polymer fiber layer.

Herein, the polymer fiber layer may be disposed between the electrodes like a conventional separator to reduce or prevent short circuits. The separator-integrated type electrode according to some example embodiments can simplify the process by reducing costs and improving productivity without undergoing a separate process such as, e.g., a lamination process, for attaching the electrode and the separator together.

Nonwoven separators manufactured by processing into known fibers presents a challenge that the adhesion between fibers is typically weak, resulting in low tensile strength, too low air permeability, and almost no adhesive strength to the electrode. This may cause delamination during cell assembly, and short circuits during cell operation.

However, the polymer fiber layer in the separator-integrated type electrode according to one example embodiment can have a desired or improved tensile strength, a desired air permeability, and a desired or improved adhesive strength to the electrode.

The tensile strength of the polymer fiber layer of the separator-integrated type electrode in the MD direction is greater than or equal to about 120 kgf/cm$^2$. The tensile strength of the polymer fiber layer may be greater than or equal to about 130 kgf/cm$^2$, greater than or equal to about 150 kgf/cm$^2$, greater than or equal to about 170 kgf/cm$^2$, greater than or equal to about 180 kgf/cm$^2$, greater than or equal to about 190 kgf/cm$^2$, or greater than or equal to about 200 kgf/cm$^2$, and the higher the tensile strength of the polymer fiber layer, the better, so there may be no upper limit to the tensile strength. The tensile strength in the MD direction of the above polymer fiber layer can be measured using a universal testing machine (UTM). For example, the tensile strength in the MD direction can be obtained by detaching a polymer fiber layer from a separator-integrated type electrode, applying a tensile force at a constant speed using a UTM, and measuring the force required per unit area until the polymer fiber layer is broken.

The air permeability of the polymer fiber layer of the above separator-integrated type electrode is less than or equal to about 500 sec/100 cc. The air permeability of the polymer fiber layer may be less than or equal to about 450 sec/100cc, less than or equal to about 400 sec/100cc, less than or equal to about 350 sec/100cc, less than or equal to about 300 sec/100cc, less than or equal to about 250 sec/100cc, less than or equal to about 200 sec/100cc, less than or equal to about 150 sec/100cc, or less than or equal to about 130 sec/100cc, and greater than or equal to about 50 sec/100cc, greater than or equal to 60 sec/100cc, greater than or equal to 70 sec/100cc, greater than or equal to 80 sec/100cc, or greater than or equal to 90 sec/100cc. When the air permeability of the polymer fiber layer satisfies the above range, the cell can be operated because the electrolyte and ions can move smoothly while reducing or preventing the occurrence of a short circuit. The air permeability of the polymer fiber layer is the time it takes for 100 cc of air to pass through a predetermined area when a predetermined pressure is applied. The air permeability may be measured using an air permeability measuring device, and for example, may be measured using an EG01-55-1MR device from Asahi Seiko.

The polymer fiber layer may further include a first polymer together with polyacrylic acid (PAA). The polymer fiber layer can further improve adhesion, heat resistance, and spinning by further including a first polymer in addition to polyacrylic acid.

The first polymer may include at least one of polyvinylidene fluoride (PVdF), a polyvinylidene fluoride-hexafluoropropylene copolymer (PVdF-HFP), polymethylmethacrylate (PMMA), polyacrylonitrile (PAN), or a mixture thereof.

The first polymer may be or include a polyvinylidene fluoride-based polymer. The polyvinylidene fluoride-based polymer may include a homopolymer or a copolymer, and as an example, polyvinylidene fluoride (PVdF) or polyvinylidene fluoride-hexafluoropropylene copolymer (PVdF-HFP). In some example embodiments, the first polymer may be or include polyvinylidene fluoride.

A weight ratio of polyacrylic acid to the first polymer in the polymer fiber layer may be in a range of about 1:9 to about 9:1, about 5:5 to about 9:1, or about 6:4 to about 8:2. When the polyacrylic acid and the first polymer in the polymer fiber layer satisfy the above range, the dimensional stability is further improved, enabling the manufacture of a battery having high-efficiency charge/discharge characteristics.

The polymer fiber layer may be in the form of a nonwoven fabric in which a plurality of polymer fibers are integrated.

A diameter of fibers within the polymer fiber layer may be in a range of $\geq$ 10 nm to $\leq$ 1000 nm, of $\geq$ 50 nm to $\leq$ 500 nm, of $\geq$ 50 nm to $\leq$ 200 nm, or of $\geq$ 50 nm to $\leq$ 150 nm. The diameter of the fibers within the polymer fiber layer can be measured using a transmission electron microscope photograph or a scanning electron microscope photograph, and the diameter of the fibers can be, for example, an average diameter. The average diameter of the fibers may be an average value of the diameters of each fiber measured in a transmission electron microscope photograph or a scanning electron microscope photograph. When the diameter of the fibers in the polymer fiber layer satisfies the above range, a highly porous structure can be formed, and the mobility of lithium ions can be improved.

The separator-integrated type electrode can satisfy the above-mentioned tensile strength and the above-mentioned air permeability, while improving the heat shrinkage rate and having desired or improved adhesive strength to the electrode.

For example, the thermal shrinkage rate of the polymer fiber layer of the separator-integrated type electrode may be less than or equal to about 1%, for example, less than or equal to about 0.95%, less than or equal to about 0.9%, less than or equal to about 0.85%, or less than or equal to about 0.81%, and the lower limit is not particularly limited because the lower the lower limit, the better the thermal shrinkage rate, but may be greater than or equal to 0%, greater than or equal to about 0.01%, greater than or equal to about 0.02%, greater than or equal to about 0.03%, greater than or equal to about 0.04%, or greater than or equal to about 0.05%. When the thermal shrinkage rate of the polymer fiber layer satisfies the above range, the thermal stability of the battery can be significantly improved. Normally, the separator is configured to physically separate the positive and negative electrodes, but when the separator shrinks due to heat, the positive and negative electrodes may come into contact with each other, causing a short circuit in the battery. The thermal shrinkage ratio is a relevant factor that can improve the thermal stability of a battery. A lower thermal shrinkage ratio indicates a lower occurrence of shrinkage due to heat, and thus a lower thermal shrinkage ratio indicates improved thermal stability of a battery. The thermal shrinkage rate of the polymer fiber layer may be calculated by measuring the length before shrinkage in the **TD** direction or MD direction, and the length after shrinkage in the **TD** direction or MD direction after placing the separator-integrated type electrode in an oven at a temperature of about 150 °C for about 1 hour, and then calculating the average value by substituting the results into Equation 1.

## Equation 1:

$$\text{Thermal shrinkage rate (\%)} = (A_i - A_f)/A_i \times 100$$

In Equation 1 above, $A_i$ is a length before shrinkage in the TD direction or MD direction, and $A_f$ is a length after shrinkage in the TD direction or MD direction.

The thickness of the polymer fiber layer may be in a range of $\geq 5\ \mu m$ to $\leq 40\ \mu m$. For example, the thickness may be about $7\ \mu m$ to $\leq 20\ \mu m$, or about $8\ \mu m$ to $\leq 16\ \mu m$. The thickness of the above polymer fiber layer can be measured by taking a cross-section of the separator-integrated type electrode using a scanning electron microscope (SEM), and measuring only the thickness of the polymer fiber layer excluding the electrode, or the thickness of the above polymer fiber layer can be measured using a micrometer.

The polymer fiber layer may further include an inorganic substance inside the polymer fiber layer. The inorganic material may be dispersed in the pores within the polymer fiber layer.

The inorganic material may include inorganic particles of at least one of $Al_2O_3$, $SiO_2$, $TiO_2$, $SnO_2$, $CeO_2$, $MgO$, $NiO$, $CaO$, $GaO$, $ZnO$, $ZrO_2$, $Y_2O_3$, $SrTiO_3$, $BaTiO_3$, $Mg(OH)_2$, boehmite, or a combination thereof, but is not limited thereto.

Electrode

The above electrode may include an electrode current collector and an electrode active material layer on the electrode current collector. Herein, the separator-integrated type electrode may have a structure in which an electrode collector-electrode active material layer-polymer fiber layer are laminated, e.g., sequentially laminated.

The electrode may be either a positive electrode or a negative electrode.

Hereinafter, the cases where the electrode is a positive electrode and the cases where the electrode is a negative electrode are explained separately.

When the electrode is a positive electrode, the electrode current collector may be a positive electrode current collector, and the electrode active material layer may be a positive electrode active material layer.

The positive electrode current collector is not particularly limited as long as the positive electrode current collector has conductivity and does not cause adverse chemical changes in the rechargeable lithium battery. In some example embodiments, the positive electrode collector may be or include an aluminum foil.

The positive electrode active material layer may include a positive electrode active material, and may optionally include a first binder, a first conductive material, or a combination thereof.

The positive electrode active material may be or include a compound (lithiated intercalation compound) capable of intercalating and deintercalating lithium. For example, one or more types of composite oxides of lithium and a metal such as or including at least one of cobalt, manganese, nickel, and combinations thereof may be included.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any of the following chemical formulas may be included. $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}XbO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $LiaNi_{1-b-c}Mn_bX_cO_{2-\alpha}O_\alpha$ ($0.90 \leq a \leq 1.8$, $0 \leq b \leq 0.5$, $0 \leq c \leq 0.5$, $0 < \alpha < 2$); $Li_aNi_bCo_cL^1_{d-}G_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$);

$Li_aMn_{1-g}G_gPO_4$ (0.90≤a≤1.8, 0≤g≤0.5); $Li_{(3-f)}Fe_2(PO_4)_3$ (0≤f≤2); and $Li_aFePO_4$ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

Chemical Formula 11:          $Li_{a1}Ni_{x1}M^1_{y1}M^2_{z1}O_{2-b1}X_{b1}$

In Chemical Formula 11, 0.9≤a1≤1.8, 0.3≤x1≤1, 0≤y1≤0.7, 0≤z1≤0.7, 0.9≤x1+y1+z1≤1.1, and 0≤b1≤0.1, $M^1$ and $M^2$ are each independently at least one of Al, B, Ba, Ca, Ce, Co, Cr, Cu, Fe, Mg, Mn, Mo, Nb, Si, Sn, Sr, Ti, V, W, Y, Zn, Zr, or a combination thereof, and X is or includes one or more of F, P, and S.

In Chemical Formula 11, 0.6≤x1≤1, 0≤y1≤0.4, and 0≤z1≤0.4, or 0.8≤x1≤1, 0≤y1≤0.2, and 0≤z1≤0.2.

Chemical Formula 12:          $Li_{a2}Co_{x2}M^3_{y2}O_{2-b2}X_{b2}$

In Chemical Formula 12, 0.9≤a2≤1.8, 0.7≤x2≤1, 0≤y2≤0.3, 0.9≤x2+y2≤1.1, and 0≤b2≤0.1, $M^3$ is or includes one or more of Al, B, Ba, Ca, Ce, Cr, Cu, Fe, Mg, Mn, Mo, Ni, Se, Si, Sn, Sr, Ti, V, W, Y, Zn, Zr, or a combination thereof, and X is or includes at least one of F, P, S, or a combination thereof.

Chemical Formula 13L          $Li_{a3}Fe_{x3}M^4_{y3}PO_{4-b3}X_{b3}$

In Chemical Formula 13, 0.9≤a3≤1.8, 0.6≤x3≤1, 0≤y3≤0.4, and 0≤b3≤0.1, $M^4$ is or includes one or more of Al, B, Ba, Ca, Ce, Co, Cr, Cu, Mg, Mn, Mo, Ni, Se, Si, Sn, Sr, Ti, V, W, Y, Zn, Zr, or a combination thereof, and X is or includes at least one of F, P, S, or a combination thereof.

Chemical Formula 14:          $Li_{a4}Ni_{x4}Mn_{y4}M^5_{z4}O_{2-b4}X_{b4}$

In Chemical Formula 14, 0.9≤a4≤1.8, 0.8≤x4<1, 0<y4≤0.2, 0≤z4≤0.2, 0.9≤x4+y4+z4≤1.1, and 0≤b4≤0.1, $M^5$ is or includes Al, B, Ba, Ca, Ce, Cr, Cu, Fe, Mg, Mo, Nb, Si, Sn, Sr, Ti, V, W, Y, Zn, Zr, or a combination thereof, and X is or includes one or more of F, P, and S.

As an example, the positive electrode active material may be or include a high nickel-based positive electrode active material having a nickel content of greater than or equal to about 80 mol%, greater than or equal to about 85 mol%, greater than or equal to about 90 mol%, greater than or equal to about 91 mol%, greater than or equal to about 94 mol%, or greater than or equal to 99 mol% based on 100 mol% of a metal excluding lithium in the lithium transition metal composite oxide. The high-nickel-based positive electrode active materials can achieve high capacity and can be applied to high-capacity, high-density rechargeable lithium batteries.

The first binder is configured to attach the positive electrode active materials to each other, and to attach the positive electrode active material to the electrode current collector. Examples of the first binder may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, (meth)arcylated styrene-butadiene rubber, an epoxy resin, (meth)acryl resin, polyester resin, nylon, and the like, but are not limited thereto.

The first conductive material is included to provide conductivity to the electrode, and any material that does not cause a chemical change in the battery to be formed and is electronically conductive can be included. Examples of such a first conductive material may include a conductive material including a carbon-based material such as at least one of natural graphite, artificial graphite, carbon black, acetylene black, Ketjen black, a carbon fiber, a carbon nanofiber, and a carbon nanotube; a metal-based material including at least one of copper, nickel, aluminum, silver, and the like, and in the form of a metal powder or a metal fiber; a conductive polymer such as a polyphenylene derivative; or a mixture thereof.

When the electrode is a negative electrode, the electrode current collector can be a negative electrode current collector, and the electrode active material layer can be a negative electrode active material layer.

The negative electrode current collector is not particularly limited as long as the negative electrode current collector has conductivity and does not cause an adverse chemical change in the rechargeable lithium battery. The negative electrode current collector may be or include at least one of a copper foil, a nickel foil, a stainless steel foil, a titanium foil, a nickel foam, a copper foam, a polymer substrate coated with a conductive metal, and a combination thereof.

The negative electrode active material layer may include a negative electrode active material, and may optionally further include a second binder, a second conductive material, or a combination thereof.

The negative electrode active material includes at least one of a material capable of reversibly intercalating/deintercalating lithium ions, a lithium metal, an alloy of lithium metal, a material capable of doping and dedoping lithium, or a transition metal oxide.

The material capable of reversibly intercalating/deintercalating lithium ions may be or include a carbon-based negative electrode active material. In some example embodiments, the negative electrode active material may include a carbon-based negative electrode active material.

The carbon-based negative electrode active material may include crystalline carbon, amorphous carbon, or a combination thereof. The crystalline carbon may be irregular, or sheet, flake, spherical, or fiber-shaped natural graphite or artificial graphite. The amorphous carbon may be or include at least one of a soft carbon, a hard carbon, a mesophase pitch carbonization product, calcined coke, and the like. The soft carbon refers to a carbon material that can be graphitized, and is a material that is readily graphitized by heat treatment at a high temperature, for example, of about 2800 °C. The hard carbon is a carbon material that cannot be graphitized or that is only slightly graphitized by heat treatment.

The negative electrode active material layer may further include other types of negative electrode active materials in addition to the carbon-based negative electrode active material, and may further include, for example, at least one of a lithium metal, an alloy of lithium metal, a material capable of doping and dedoping lithium, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, Sn, or a combination thereof.

The material capable of doping/dedoping lithium may be or include a Si-based negative electrode active material or a Sn-based negative electrode active material. The Si-based negative electrode active material may include at least one of silicon, a silicon-carbon composite, $SiO_x$ ($0 < x \leq 2$), and a Si-Q alloy (wherein Q is or includes at least one of an alkali metal, an alkaline-earth metal, a Group 13 element, a Group 14 element, a Group 15 element, a Group 16 element, a transition metal, a rare earth element, and a combination thereof, but not Si); and the Sn-based negative electrode active material may include at least one of Sn, $SnO_2$, an Sn-R alloy (wherein R is or includes at least one of an alkali metal, an alkaline-earth metal, a Group 13 element, a Group 14 element, a Group 15 element, a Group 16 element, a transition metal, a rare earth element, and a combination thereof, but not Sn). At least one of the above materials may be mixed with $SiO_2$. The elements Q and R may be or include at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof.

For example, the negative electrode active material may include silicon-carbon composite particles. An average particle diameter ($D_{50}$) of the silicon-carbon composite particles may be, for example, in a range of $\geq 0.5\ \mu m$ to $\leq 20\ \mu m$. The average particle diameter ($D_{50}$) is measured by a particle size analyzer and refers to the diameter of particles having a cumulative volume of 50 volume% in the particle size distribution. Based on 100 wt% of the silicon-carbon composite particles, silicon may be included in an amount in a range of $\geq 10$ wt% to $\leq 60$ wt%, and carbon may be included in an amount in a range of $\geq 40$ wt% to $\leq 90$ wt%. For example, the silicon-carbon composite particles may include a core including silicon particles, and a carbon coating layer on the surface of the core. An average particle diameter ($D_{50}$) of the silicon particles may be in a range of $\geq 10$ nm to $\leq 1\ \mu m$, or of $\geq 10$ nm to $\leq 200$ nm in the core. The silicon particles may be present as silicon alone, in the form of a silicon alloy, or in an oxidized form. The oxidized form of silicon may be represented by SiOx ($0<x\leq2$). In addition, a thickness of the carbon coating layer may be in a range of $\geq 5$ nm to $\leq 100$ nm.

As an example, the silicon-carbon composite particles may include a core including silicon particles and crystalline carbon, and a carbon coating layer disposed on the surface of the core and including amorphous carbon. For example, in the silicon-carbon composite particles, amorphous carbon may not be present in the core but only in the carbon coating layer. The crystalline carbon may be or include artificial graphite, natural graphite, or a combination thereof, and the amorphous carbon may be or include at least one of coal-based pitch, mesophase pitch, petroleum-based pitch, coal-based oil, heavy petroleum oil, or a polymer resin (phenolic resin, furan resin, polyimide, and the like). Herein, a content of the crystalline carbon may be in a range of $\geq 10$ wt% to $\leq 70$ wt%, and a content of the amorphous carbon may be in a range of $\geq 20$ wt% to $\leq 40$ wt% based on 100 wt% of the silicon-carbon composite particles.

In the silicon-carbon composite particle, the core may include a void in the center. A radius of the void may be in a range of $\geq 30$ length% to $\leq 50$ length% of the radius of the silicon-carbon composite particle.

The aforementioned silicon-carbon composite particles effectively reduce or suppress challenges such as, e.g., volume expansion, structural collapse, or particle crushing due to charging and discharging, reduce or prevent disconnection of conductive paths, achieve high capacity and high efficiency, and is advantageous to use under high-voltage or high-speed charging conditions.

The Si-based negative electrode active material or Sn-based negative electrode active material may be included by mixing with a carbon-based negative electrode active material. When using a mixture of Si-based negative electrode active material or Sn-based negative electrode active material and carbon-based negative electrode active material, a mixing ratio thereof may be in a range of about 1:99 to about 90:10 by weight.

The second binder is configured to adhere the negative electrode active material particles to each other, and to adhere the negative electrode active material to the current collector. The second binder may be or include at least one of a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acryl rubber, a butyl rubber, a fluorine rubber, polyethyleneoxide, polyvinylpyrrolidone, polyepichlorohydrin, polyphosphazene, poly(meth)acrylonitrile, an ethylene propylenediene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is included as the second binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed. The alkali metal may be or include at least one of Na, K, or Li.

The dry binder may be or include a polymer material capable of being fibrous, and may be or include, for example, at least one of polytetrafluoroethylene, polyvinylidene fluoride, a polyvinylidene fluoride-hexafluoropropylene copolymer, polyethylene oxide, or a combination thereof.

The second conductive material is included to provide electrode conductivity, and any electrically conductive material may be included as a conductive material unless the electrically conductive material causes an adverse chemical change in the battery. Examples of the conductive material may include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

The electrode active material (positive electrode active material or negative electrode active material) may be included in an amount in a range of $\geq 90$ wt% to $\leq 99.8$ wt%, or of $\geq 94$ wt% to $\leq 99$ wt%, based on 100 wt% of the electrode active material layer (positive electrode active material layer or negative electrode active material layer), the binder (first binder or second binder) may be included in an amount in a range of $\geq 0.1$ wt% to $\leq 5$ wt%, or of $\geq 0.5$ wt% to $\leq 3$ wt%, based on 100 wt% of the electrode active material layer, and the conductive material (first conductive material or second conductive material) may be included in an amount in a range of $\geq 0.1$ wt% to $\leq 5$ wt%, or of $\geq 0.5$ wt% to $\leq 3$ wt%, based on 100 wt% of the electrode active material layer.

## Method for Manufacturing Separator-integrated type Electrode

In some example embodiments, a method for manufacturing a separator-integrated type electrode includes manufacturing a polymer fiber layer including polyacrylic acid on an electrode, dissolving a portion of the polyacrylic acid by spraying microdroplets onto the polymer fiber layer, and physically bonding and chemically imidizing the dissolved polyacrylic acid through thermal compression.

The separator-integrated type electrode manufactured by the manufacturing method can satisfy the tensile strength, air permeability, and adhesive strength between the electrode and the polymer fiber layer as described above, by physically bonding the fibers within the polymer fiber layer while simultaneously or contemporaneously chemically imidizing the fibers within the polymer fiber layer.

First, a polymer fiber layer including polyacrylic acid is manufactured on the electrode. The polymer fiber layer includes polyacrylic acid including a carboxyl group for the physical bonding and chemical bonding by imidization described below.

The electrode is as described above, and for example, the polymer fiber layer may be manufactured on the electrode active material layer of the electrode.

The manufacturing of the polymer fiber layer is not limited as long as the polymer fiber layer is a method capable of manufacturing a polymer fiber layer. For example, the manufacturing of the polymer fiber layer may be performed by electrospinning. For example, the manufacturing of the polymer fiber layer includes preparing a spinning solution including polyacrylic acid, injecting the spinning solution into an electrospinning nozzle, and performing electrospinning while forming an electric field between the electrospinning nozzle and an electrode (for example, an electrode active material layer), thereby forming a polymer fiber layer on the electrode (for example, an electrode active material layer).

The spinning solution may include polyacrylic acid. The spinning solution may further include a first polymer together with polyacrylic acid, and the type of the first polymer and the weight ratio of the polyacrylic acid and the first polymer are as described above.

The spinning solution may further include a first solvent that dissolves polyacrylic acid and the first polymer. The type of the first solvent is not particularly limited, as long as the first solvent can dissolve polyacrylic acid and the first polymer. For example, the first solvent may include at least one of dimethylacetamide, dimethyl acetate, dimethylformamide, dimethylformaldehyde, dimethyl sulfoxide, N-methylpyrrolidone, ethanol, methanol, chloroform, acetone, water, or a combination thereof.

**The** electrospinning may be performed at a voltage in a range of $\geq 1$ to $\leq 120$ kV, of $\geq 40$ to $\leq 90$ kV, or of $\geq 70$ to $\leq 80$ kV, and the resulting solution may then be spun from an electrospinning nozzle to which a high voltage is applied to form a nanofiber coating on the electrode.

The polymer fiber layer may be manufactured by further performing a drying process after electrospinning to remove the first solvent. According to the drying process, most of the first solvent can be removed immediately after, or soon after, electrospinning, but the first solvent can also be completely removed using a separate drying device.

Next, microdroplets are sprayed onto the polymer fiber layer to dissolve some of the polyacrylic acid. When the polymer fiber layer further includes a first polymer in addition to polyacrylic acid, a portion of the polyacrylic acid and a portion of the first polymer can be dissolved by spraying microdroplets. The microdroplets can be formed by spraying a solution including an imidization agent in a second solvent or a second solvent capable of dissolving a polymer of the manufactured polymer fiber layer, for example, polyacrylic acid, and the first polymer. That is, the microdroplets may include a second solvent, an imidization agent, or a combination thereof.

The second solvent may include a polar organic solvent, such as or including at least one of dimethylacetamide, N-methylpyrrolidone, dimethyl phthalate, dimethyl sulfoxide, pyridine, m-cresol, or a combination thereof.

The imidization agent may include an acid anhydride, or a mixture of an acid anhydride and an imidization catalyst. By further including an imidization agent in the second solvent, a chemical bond due to the imidization agent is formed together with the physical bonding of the dissolved polyacrylic acid by thermal compression described below, thereby improving the tensile strength, and at the same time, a separator-integrated type electrode exhibiting desired air permeability and low heat shrinkage that can constitute a separator can be provided.

As the above acid anhydride, an organic carboxylic acid anhydride may be included, and examples thereof may include at least one of acetic anhydride, propionic anhydride, butyric anhydride, benzoic anhydride, or a combination thereof.

The imidization catalyst may include at least one of isoquinoline, pyridine, trialkylamines, methylpyridine, lutidine, N-methylmorpholine, or a combination thereof.

The imidization agent may be included in an amount in a range of $\geq 5$ to $\leq 20$ parts by weight based on 100 parts by weight of the microdroplets. When the imidization agent is a mixture of an acid anhydride and an imidization catalyst, the weight ratio of the acid anhydride and the imidization catalyst may be in a range of about 1:0.5 to about 1:5. When the imidization agent in the microdroplets is included within the above range, in addition to the physical bonding by heat compression described below, a chemical bond can be formed to further improve the tensile strength and heat shrinkage rate.

The spraying is not limited as long as it is to a method capable of forming microdroplets of the second solvent or a solution including the second solvent. As an example, the spraying may be performed by electrospraying. For example, a polymer fiber layer may be disposed between the nozzle and the collector during the electrospraying so that the second solvent to be electrosprayed or a solution including the second solvent can be sprayed onto the polymer fiber layer. The electrospraying may be performed by spraying the second solvent or the solution including the second solvent through the nozzle at an injection rate in a range of $\geq 0.1$ mL/min to $\leq 20$ mL/min, of $\geq 0.3$ mL/h to $\leq 10$ mL/h, or of $\geq 0.5$ mL/h to $\leq 5$ mL/h, and applying a voltage in a range of $\geq 10$ kV to $\leq 100$ kV, of $\geq 30$ kV to $\leq 80$ kV, or of $\geq 50$ kV to $\leq 60$ kV.

In the portion where the second solvent or the solution including the second solvent is sprayed onto the polymer fiber layer, a portion of the polyacrylic acid in the polymer fiber layer can be dissolved due to the second solvent.

Next, the polyacrylic acid dissolved in the polymer fiber layer is physically bonded and chemically imidized through thermal compression.

The thermal compression process can be performed using a heating roller. For example, the thermal compression process may be performed at a temperature in a range of $\geq 50\,°C$ to $\leq 110\,°C$, and a pressure in a range of $\geq 0.05$ MPa to $\leq 2$ MPa, and at a speed in a range of $\geq 1$ cm/min to $\leq 1$ m/min.

The thermal compression may physically bond the melted polymer within the polymer fiber layer, and physically bond the interface between the polymer fiber layer and the electrode by thermal compression of the laminated polymer fiber layer and the electrode.

The polyacrylic acid dissolved by the thermal compression process can form some chemical bonds while being physically bonded, and when the sprayed second solvent further includes an imidization agent, further chemical bonds can be formed due to imidization, thereby improving the tensile strength, and can provide a separator-integrated type electrode simultaneously or contemporaneously exhibiting desired air permeability and low heat shrinkage that can constitute a separator without a separate process such as, e.g., lamination, thereby simplifying the process, reducing costs, and improving productivity.

## Electrode Assembly and Rechargeable Lithium Battery

Electrode Assembly

In some example embodiments, an electrode assembly including the separator-integrated type electrode is provided. For example, the electrode assembly may include a positive electrode and a negative electrode, and the positive electrode or the negative electrode may be or include the aforementioned separator-integrated type electrode. Because the polymer fiber layer in the aforementioned separator-integrated type electrode constitutes a separator, the electrode assembly according to some example embodiments may not include a separate separator.

The contents of the aforementioned separator-integrated type electrode are as described above.

When the aforementioned separator-integrated type electrode is a positive electrode, the electrode assembly may include a separator-integrated type electrode and a negative electrode. In this case, the electrode assembly may have a structure of a separator-integrated type electrode-negative electrode, and for example, may have a structure in which a negative electrode, for example, a negative electrode active material layer, is attached to one surface of the polymer fiber layer to which a positive electrode is not attached in the separator-integrated type electrode.

When the separator-integrated type electrode is a negative electrode, the electrode assembly may include a separator-integrated type electrode and a positive electrode. In this case, the electrode assembly may have a structure of a separator-integrated type electrode-positive electrode, and for example, may have a structure in which the positive electrode, for example, a positive electrode active material layer, is attached to one surface of the polymer fiber layer to which the negative electrode is not attached in the separator-integrated type electrode.

For example, the electrode assembly may be an integrated type electrode assembly.

In some example embodiments, in a method for manufacturing a separator-integrated type electrode, after dissolving a portion of the polyacrylic acid by spraying microdroplets and before physically bonding and chemically imidizing the polyacrylic acid by thermal compression, an electrode other than the separator-integrated type electrode is disposed on a polymer fiber layer, and thermal compression is then performed to manufacture an integrated type electrode assembly. When the separator-integrated type electrode is a negative electrode, the positive electrode may be disposed on the surface of the polymer fiber layer where the negative electrode active material layer is not disposed, and thermal compression can then be performed. By the thermal compression, the negative electrode active material layer and the polymer fiber layer, the polymer fibers within the polymer fiber layer, and the polymer fiber layer and the positive electrode active material layer are physically bonded and chemically imidized to provide an integrated type electrode assembly. In the manufacturing method of the aforementioned integrated type electrode assembly, the separator-integrated type electrode assembly can be manufactured in the same manner as described in the method for manufacturing a separator-integrated type electrode, except for disposing the positive electrode.

The separator-integrated type electrode assembly can simplify the process of manufacturing a known electrode assembly, thereby reducing costs and improving productivity, while also ensuring adhesive strength between the separator-integrated type electrode and another electrode.

For example, the adhesive strength of the polymer fiber layer within the separator-integrated type electrode to an electrode not included in the separator-integrated type electrode may be greater than or equal to about 0.1 gf/mm. The upper limit of the adhesive strength between the electrode and the polymer fiber layer is not particularly limited because the higher the adhesive strength, the more the shrinkage of the polymer fiber layer due to heat can be reduced or prevented, and the electrode and the polymer fiber layer can be bonded without a separate lamination process, thereby simplifying the process, reducing costs, and improving productivity. The adhesive strength of the polymer fiber layer in the separator-integrated type electrode to an electrode not included in the separator-integrated type electrode can be measured using a UTM. For example, in an electrode assembly including a separator-integrated type electrode, an electrode other than the separator-integrated type electrode is fixed to the upper grip, and the separator-integrated type electrode is fixed to the lower grip, and the peeling force is then measured by pulling using a UTM, and the adhesive force can be measured by dividing the measured peeling force by the area of the electrode assembly.

Rechargeable Lithium Battery

A rechargeable lithium battery may include the aforementioned electrode assembly, and the electrode assembly may be impregnated with an electrolyte.

An electrolyte may be or include, for example, an electrolyte solution, which may include a non-aqueous organic solvent and a lithium salt.

The non-aqueous organic solvent is configured as a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethylacetate, methylpropionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be included alone or in a mixture of two or more types of solvents.

When using a carbonate-based solvent, a cyclic carbonate and a chain carbonate may be mixed, and the cyclic carbonate and the chain carbonate may be mixed in a volume ratio in a range of about 1:1 to about 1:9.

The lithium salt dissolved in the organic solvent is configured to supply lithium ions in a battery, to enable operation of a rechargeable lithium battery, and to improve transportation of the lithium ions between positive and negative electrodes. Examples of the lithium salt may include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide; LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

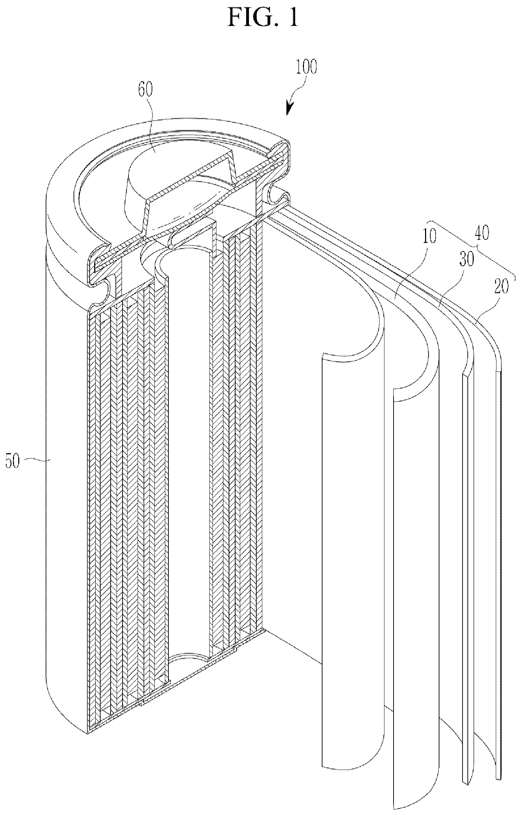

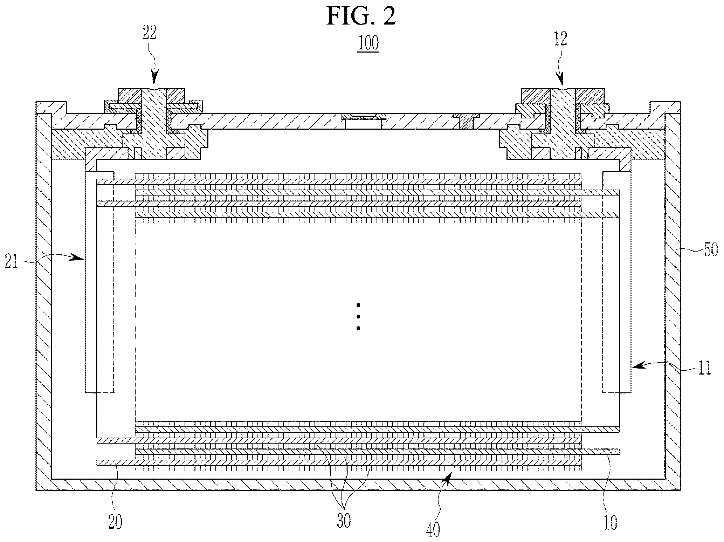

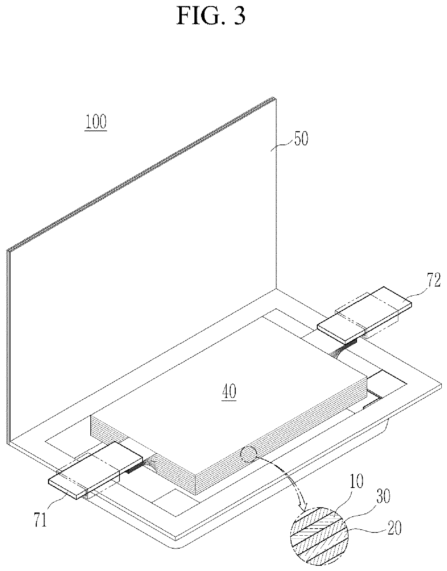

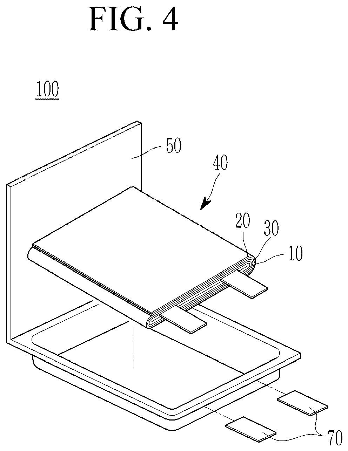

The rechargeable lithium battery may be classified into cylindrical, prismatic, pouch, or coin-type batteries, and the like depending on their shape. FIGS. 1 to 4 are schematic views illustrating a rechargeable lithium battery according to some example embodiments. FIG. 1 shows a cylindrical battery, FIG. 2 shows a prismatic battery, and FIGS. 3 and 4 show pouch-type batteries. Referring to FIGS. 1 to 4, the rechargeable lithium battery 100 may include an electrode assembly 40 including a separator 30 between a positive electrode 10 and a negative electrode 20, and a case 50 in which the electrode assembly 40 is housed. The positive electrode 10, the negative electrode 20, and the separator 30 may be impregnated with an electrolyte (not shown). The rechargeable lithium battery 100 may include a sealing member 60 sealing the case 50 as shown in FIG. 1. In addition, in FIG. 2, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 3 and 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electrical path for inducing the current in the electrode assembly 40 to the outside of the battery 100.

A rechargeable lithium battery according to some example embodiments, unlike a conventional rechargeable lithium battery, does not include a separate separator, and can be replaced with a separator-integrated type electrode. For example, in FIG. 1, the negative electrode 20 may be a separator-integrated type electrode in which the negative electrode and the separator are integrated, and the battery 100 may be the same as a conventional rechargeable lithium battery with a difference that the battery 100 includes the above separator-integrated type electrode.

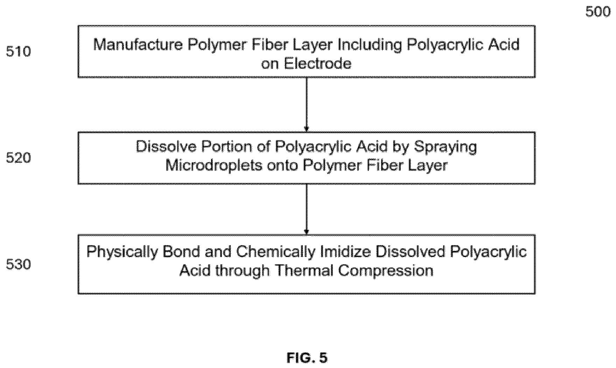

FIG. 5 is a flow chart illustrating a method of manufacturing a separator-integrated type electrode, according to example embodiments. In examples, the method 500 includes operation 510, operation 520 and operation 530.

Operation 510 includes manufacturing a polymer fiber layer including polyacrylic acid on an electrode. For example, manufacturing the polymer fiber layer includes preparing a spinning solution including polyacrylic acid, injecting the spinning solution into an electrospinning nozzle, and performing electrospinning while forming an electric field between the electrospinning nozzle and an electrode. In an example, the spinning solution further includes a first polymer and a first solvent, and the first solvent includes at least one of dimethylacetamide, dimethyl acetate, dimethylformamide, dimethylformaldehyde, dimethyl sulfoxide, N-methylpyrrolidone, ethanol, methanol, chloroform, acetone, and water.

Operation 520 includes dissolving a portion of the polyacrylic acid by spraying microdroplets onto the polymer fiber layer. For example, the microdroplets include at least one of a second solvent and an imidization agent. In another example, the second solvent includes at least one of dimethyl acetamide, N-methylpyrrolidone, dimethylphthalate, dimethylsulfoxide, pyridine, and m-cresol. In a further example, the imidization agent includes acid anhydride or a mixture of an acid anhydride and an imidization catalyst, the acid anhydride includes at least one of acetic anhydride, propionic anhydride, butyric anhydride, and benzoic anhydride, and the imidization catalyst includes at least one of isoquinoline, pyridine, trialkylamines, methylpyridine, lutidine, and N-methylmorpholine.

Operation 530 includes physically bonding and chemically imidizing the dissolved polyacrylic acid through thermal compression. For example, the thermal compression is performed using a heating roller, and is performed at a temperature in a range of $\geq 50\,°C$ to $\leq 110\,°C$, at a pressure in a range of $\geq 0.05$ MPa to $\leq 2$ MPa, and at a speed in a range of $\geq 1$ cm/min to $\leq 1$ m/min.

Hereinafter, examples of the present disclosure and comparative examples are described. These examples, however, are not in any sense to be interpreted as limiting the scope of the disclosure.

**Manufacturing of Separator-integrated type Negative Electrode**

**Example 1**

**(1) Manufacturing of Polymer Fiber Layer**

A negative electrode active material prepared by mixing artificial graphite and silicon particles in a weight ratio of 93.5:6.5, a binder prepared by mixing styrene-butadiene rubber and carboxylmethyl cellulose in a ratio of 1:2 were mixed in a weight ratio of 97:3, and then dispersed in distilled water to prepare a negative electrode slurry. The negative electrode slurry was coated to be 10 μm thick on a copper foil and then, dried and compressed to manufacture a negative electrode.

A spinning solution was prepared by mixing polyacrylic acid and polyvinylidene fluoride in a weight ratio of 7:3 and then, dispersing the mixture in dimethyl acetamide as a first solvent.

The spinning solution was electrospun on the prepared negative electrode (negative electrode active material layer), and then dried with hot air at 90 °C to remove a first solvent. Herein, the electrospinning was performed by positioning a nozzle pack consisting of a tip with a hole size of 25G and a roller at a distance of 15 cm, injecting the spinning solution into the tip, and applying a voltage of about 70 kV thereto at 20 °C under relative humidity of 0.01%, manufacturing an integrated type electrode with a polymer fiber layer formed on the negative electrode.

**(2) Electrospraying**

On the polymer fiber layer, dimethyl acetamide as a second solvent was electrosprayed to form microdroplets of dimethyl acetamide, thereby dissolving some of the polyacrylic acid of the polymer fiber layer. The electrospraying was performed by positioning a nozzle pack consisting of a tip with a hole size of 25G and a roller at a distance of 15 cm, injecting the dimethyl acetamide as the second solvent into the tip at a speed of 1 mL/min, and applying a voltage of about 50 kV thereto. Herein, the electrospraying was performed under the same temperature and humidity conditions as in the electrospinning.

**(3) Thermal Compression**

The polyacrylic acid, which was dissolved in the second solvent by electrospraying the second solvent onto the polymer fiber layer, was physically bonded through thermal compression. Herein, the thermal compression process proceeded by using a heating roller. The thermal compression process was performed at a temperature of 85 °C under a pressure of 0.2 MPa at a speed of 5 cm/min.

**Example 2**

A separator was manufactured in the same manner as in Example 1, with a difference that the polyacrylic acid alone was used instead of the mixture of polyacrylic acid and polyvinylidene fluoride in a ratio of 7:3 in the (1) preparation of the polymer fiber layer of Example 1. Herein, when the microdroplets were dispersed, some of the polyacrylic acid was dissolved therein.

**Example 3**

A separator was manufactured in the same manner as in Example 1, with a difference that a mixed solvent of the dimethyl acetamide as the second solvent with a mixture of acetic anhydride, which is an acid anhydride, and isoquinoline, which is an imidization catalyst, as an imidization agent was used instead of the dimethyl acetamide as the second solvent during the (2) electrospraying of Example 1.

Herein, the imidization agent included in the mixed solvent was used in an amount of 14 parts by weight based on 100 parts by weight of the dimethyl acetamide, and the acid anhydride and the imidization catalyst in the imidization agent had a weight ratio of 1:1.

**Example 4**

A separator was manufactured in the same manner as in Example 3, with a difference that the polyacrylic acid alone was used instead of the mixture of polyacrylic acid and polyvinylidene fluoride in the ratio of 7:3 in the (1) preparation of the polymer fiber layer of Example 3. Herein, when the microdroplets were dispersed, some of the polyacrylic acid was dissolved.

### Comparative Example 1

A separator was manufactured in the same manner as in Example 1, with a difference that the (1) preparation of the polymer fiber layer of Example 1 was performed, but the (2) electrospraying and the (3) thermal compression of Example 1 were not performed.

### Comparative Example 2

A separator was manufactured in the same manner as in Example 2, with a difference that the (1) preparation of the polymer fiber layer of Example 2 was performed, but the (2) electrospraying and the (3) thermal compression of Example 2 were not performed.

### Comparative Example 3

A separator was manufactured in the same manner as in Example 1, with a difference that distilled water was used instead of the dimethyl acetamide as the solvent for the (2) electrospraying of Example 1. Herein, the polyacrylic acid and the polyvinylidene fluoride were not dissolved in the microdroplets including the distilled water.

### Comparative Example 4

A separator was manufactured in the same manner as in Example 1, with a difference that the (2) electrospraying of Example 1 was not performed.

### Comparative Example 5.

A separator was manufactured in the same manner as in Comparative Example 1, with a difference that the polyacrylonitrile was used instead of polyacrylic acid to be mixed with the polyvinylidene fluoride in a ratio of 7:3 during the (1) preparation of the polymer fiber layer of Comparative Example 1.

### Manufacturing of Integrated type Electrode Assembly:

### Reference Example 1

A positive electrode was placed on the surface of the polymer fiber layer, onto which a solvent was sprayed, after the (2) electrospraying of Example 3 but before the (3) thermal compression of Example 3, and then thermally compressed to manufacture an integrated type electrode assembly, in which the separator-integrated type electrode (negative electrode-polymer fiber layer) and the positive electrode were sequentially stacked.

The positive electrode was manufactured by dispersing a mixture of $LiNi_{0.91}Co_{0.05}Al_{0.04}O_2$ as a positive electrode active material, polyvinylidene fluoride (PVDF) as a first binder, and carbon as a second conductive material in a weight ratio of 92: 4: 4 in N-methyl-2-pyrrolidone to prepare a positive electrode slurry, applying the positive electrode slurry onto an aluminum foil, and then drying and compressing the positive electrode slurry.

### Reference Example 2

A positive electrode was placed on the surface of the polymer fiber layer, onto which a solvent was sprayed, after the (2) electrospraying of Example 4 but before the (3) thermal compression of Example 4, and then thermally compressed to manufacture an integrated type electrode assembly, in which the separator-integrated type electrode (negative electrode-polymer fiber layer) and the positive electrode were sequentially stacked.

The positive electrode was the same as the one in Reference Example 1.

### Evaluation Example

Each polymer fiber layer of the separator-integrated type negative electrodes according to Examples 1 to 4 and Comparative Examples 1 to 5 were measured with respect to a thermal shrinkage rate, air permeability, and tensile strength in the following methods, and the results are shown in Table 1 below. In addition, each polymer fiber layer of the electrode assemblies according to Reference Examples 1 to 2 were measured with respect to a thermal shrinkage rate and adhesion to each positive electrode in the following methods, and the results are shown in Table 1 below.

Herein, in the electrode assemblies of Example 1 to 4 and Comparative Example 1 to 5, in which a positive electrode was not adhered onto each polymer fiber layer of the separator-integrated type negative electrodes, measuring the adhesion to the positive electrode could not be performed, and in the electrode assemblies of Reference Examples 1 to 2, in which the separator-integrated type negative electrode was bonded with the positive electrode, measuring the air permeability and tensile strength of the polymer fiber layer could not be performed.

## 1. Thermal Shrinkage Rate

The separator-integrated type negative electrodes according to Examples 1 to 4 and Comparative Examples 1 to 5 and the electrode assemblies according to Reference Examples 1 to 2 were respectively cut into 5 pieces with a size of a width (in a machine direction (MD)) of about 10 cm × a length (in a transverse direction (TD)) of about 10 cm and stored in a chamber at 150 °C for 1 hour to respectively measure the lengths of the polymer fiber layer in the TD and MD directions before the shrinkage and after the shrinkage, and thus calculate a thermal shrinkage rate thereof according to Equation 1, and also calculate an average value of the total ten measurements.

$$\text{Equation 1:}$$

$$\text{Thermal shrinkage rate (\%)} = (A_i - A_f)/A_i \times 100$$

In Equation 1, $A_i$ is a length before the shrinkage in the TD direction or the MD direction, and $A_f$ is a length after the shrinkage in the TD direction or the MD direction.

## 2. Air Permeability

Each of the separator-integrated type negative electrodes of Examples 1 to 4 and Comparative Examples 1 to 5 was measured with respect to time for 100 cc of air to pass therethrough by using an air permeability measuring device (EG01-55-1MR, Asahi Seiko Co., Ltd.). The time was measured five different times to calculate an average value, which was evaluated as air permeability.

## 3. Tensile Strength

The separator-integrate type negative electrodes according to Examples 1 to 4 and Comparative Examples 1 to 5 were respectively cut into 5 pieces each having a rectangular shape with a width (MD) of 10 mm × a length (TD) of 25 mm, and after mounting each of the samples on UTM (universal tensile tester) and fixing each separator-integrate type negative electrode to have a measurement length of 40 mm, each separator-integrate type negative electrode was pulled in the MD direction to measure average tensile strength.

## 4. Adhesive **Strength** to Positive Electrode

The separator-integrated type negative electrodes according to Reference Examples 1 to 2 were cut into a width of 25 mm and a length of 80 mm. Subsequently, the positive electrode was fixed into an upper grip, while fixing the separator-integrated type negative electrode into a lower grip, and then elongated and peeled off by using UTM. Herein, a speed was 100 mm/min, and the measurement was three times repeated to calculate an average value.

Table 1:

|  | Thermal shrinkage rate (%) | Air permeability (sec/100 cc) | Tensile strength (kgf/cm$^2$) | Adhesive strength (gf/mm) |
|---|---|---|---|---|
| Example 1 | 0.75 | 91 | 213 | - |
| Example 2 | 0.68 | 98 | 224 | - |
| Example 3 | 0.65 | 111 | 278 | - |
| Example 4 | 0.47 | 125 | 311 | - |
| Comparative Example 1 | 1.37 | 29 | 111 | - |
| Comparative Example 2 | 1.23 | 36 | 112 | - |
| Comparative Example 3 | 1.12 | 38 | 122 | - |

(continued)

| | Thermal shrinkage rate (%) | Air permeability (sec/100 cc) | Tensile strength (kgf/cm$^2$) | Adhesive strength (gf/mm) |
|---|---|---|---|---|
| Comparative Example 4 | 1.01 | 613 | 175 | - |
| Comparative Example 5 | 1.41 | 33 | 104 | - |
| Reference Example 1 | 0.06 | - | - | 0.19 |
| Reference Example 2 | 0.05 | - | - | 0.11 |

## Summary

Referring to Table 1, Examples 1 to 4, compared with Comparative Examples 1 to 5, exhibited a low thermal shrinkage rate, exhibited desired air permeability, and had desired or significantly improved tensile strength, which confirmed that mechanical strength and thermal strength of Examples 1 to 4 were improved by physical bonding and chemical imidization between fibers in the polymer fiber layer including polyacrylic acid, as well as between electrode and polymer fiber layer. The separator-integrated type electrodes of Comparative Examples 1 to 5, which were not like the separator-integrated type electrodes of the examples, exhibited a relatively high thermal shrinkage rate and substantially low air permeability, which could cause a short circuit, and when the air permeability is substantially high, there could be difficulty in operating cells and disadvantages of low tensile strength.

In addition, according to Reference Examples 1 to 2, the separator-integrated type electrode assemblies manufactured by adhering a positive electrode before the thermal compression, compared with the separator-integrated type electrodes of Examples 1 to 4, exhibited a much lower thermal shrinkage rate, which may be caused by adhesion of the polymer fiber layer to the positive electrode as well as to the negative electrode in the separator-integrated type electrode, and in addition, the positive electrode and the separator-integrated type negative electrode had an adhesive strength of 0.1 gf/mm or more, which implies that manufacturing an integrated type electrode assembly itself without a separate process may be possible.

While this disclosure has been described in connection with what is presently considered to be practical example embodiments, it is to be understood that the disclosure is not limited to the disclosed example embodiments. On the contrary, the disclosure is intended to cover various modifications and equivalent arrangements included within the spirit and scope of the appended claims.

**Description of Symbols:**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A separator-integrated type electrode, comprising:

   an electrode, and
   a polymer fiber layer on the electrode,
   wherein the polymer fiber layer comprises polyacrylic acid,
   a tensile strength of the polymer fiber layer in a MD direction is greater than or equal to about 120 kgf/cm$^2$, and
   an air permeability of the polymer fiber layer is less than or equal to about 500 sec/100 cc.

2. The separator-integrated type electrode as claimed in claim 1, wherein:

   the polymer fiber layer further comprises a first polymer, and
   the first polymer comprises at least one of polyvinylidene fluoride (PVdF), a polyvinylidene fluoride-hexafluoropropylene copolymer (PVdF-HFP), polymethylmethacrylate (PMMA), and polyacrylonitrile (PAN).

3. The separator-integrated type electrode as claimed in claim 1 or
2, wherein the polymer fiber layer further comprises a first polymer, and
wherein a weight ratio of polyacrylic acid to the first polymer in the polymer fiber layer is in a range of about 1:9 to about 9:1.

4. The separator-integrated type electrode as claimed in any one of claims 1 to 3, wherein a diameter of fibers within the polymer fiber layer is in a range of $\geq 10$ nm to $\leq 1000$ nm.

5. The separator-integrated type electrode as claimed in any one of claims 1 to 4, wherein:

a thermal shrinkage of the polymer fiber layer is less than or equal to about 1%, calculated by measuring the length before shrinkage in a **TD** or MD direction and the length after shrinkage in the **TD** or MD direction after placing the separator-integrated type electrode at a temperature of 150 °C for 1 hour and then calculating an average value by substituting the results into Equation 1:

$$\text{Equation 1:}$$

$$\text{Thermal shrinkage rate (\%)} = (A_i - A_f)/A_i \times 100$$

wherein, in Equation 1, $A_i$ is a length before shrinkage in the TD direction or MD direction, and $A_f$ is a length after shrinkage in the TD direction or MD direction.

6. The separator-integrated type electrode as claimed in any one of claims 1 to 5, wherein the polymer fiber layer has a thickness in a range of $\geq 5$ $\mu$m to $\leq 40$ $\mu$m.

7. A method for manufacturing a separator-integrated type electrode, the method comprising:

manufacturing a polymer fiber layer including polyacrylic acid on an electrode;
dissolving a portion of the polyacrylic acid by spraying microdroplets onto the polymer fiber layer; and
physically bonding and chemically imidizing the dissolved polyacrylic acid through thermal compression.

8. The method as claimed in claim 7, wherein the manufacturing the polymer fiber layer comprises:

preparing a spinning solution including polyacrylic acid;
injecting the spinning solution into an electrospinning nozzle; and
performing electrospinning while forming an electric field between the electrospinning nozzle and an electrode.

9. The method as claimed in claim 8, wherein:

the spinning solution further comprises a first polymer and a first solvent, and
the first solvent comprises at least one of dimethylacetamide, dimethyl acetate, dimethylformamide, dimethylformaldehyde, dimethyl sulfoxide, N-methylpyrrolidone, ethanol, methanol, chloroform, acetone, and water.

10. The method as claimed in any one of claims 7 to 9, wherein the microdroplets comprise at least one of a second solvent and an imidization agent.

11. The method as claimed in any one of claims 7 to 10, wherein the microdroplets comprise at least one of a second solvent and an imidization agent, and wherein the second solvent comprises at least one of dimethyl acetamide, N-methylpyrrolidone, dimethylphthalate, dimethylsulfoxide, pyridine, and m-cresol.

12. The method as claimed in any one of claims 7 to 11, wherein the microdroplets comprise at least one of a second solvent and an imidization agent, and wherein:

the imidization agent comprises acid anhydride or a mixture of an acid anhydride and an imidization catalyst,
the acid anhydride comprises at least one of acetic anhydride, propionic anhydride, butyric anhydride, and benzoic anhydride, and

the imidization catalyst comprises at least one of isoquinoline, pyridine, trialkylamines, methylpyridine, lutidine, and N-methylmorpholine.

13. The method as claimed in any one of claims 7 to 12, wherein:

the thermal compression is performed using a heating roller, and

the thermal compression is performed at a temperature in a range of $\geq 50$ °C to $\leq 110$ °C, at a pressure in a range of $\geq 0.05$ MPa to $\leq 2$ MPa, and at a speed in a range of $\geq 1$ cm/min to $\leq 1$ m/min.

14. An electrode assembly (40) comprising the separator-integrated type electrode as claimed in any one of claims 1 to 6.

15. A rechargeable lithium battery (100), comprising the electrode assembly (40) as claimed in claim 14.

# FIG. 1

# FIG. 2

<u>100</u>

EP 4 723 354 A1

FIG. 3

# FIG. 4

500

510  Manufacture Polymer Fiber Layer Including Polyacrylic Acid
on Electrode

520  Dissolve Portion of Polyacrylic Acid by Spraying
Microdroplets onto Polymer Fiber Layer

530  Physically Bond and Chemically Imidize Dissolved Polyacrylic
Acid through Thermal Compression

**FIG. 5**

Europäisches
Patentamt

European
Patent Office

Office européen
des brevets

# EUROPEAN SEARCH REPORT

**Application Number**

EP 25 20 4202

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 493 297 A1 (BYD CO LTD [CN]) 5 June 2019 (2019-06-05) | 1-6,14, 15 | INV. H01M50/46 |
| Y | * claims 1-39 * | 7-13 | H01M50/403 H01M50/42 |
| Y | WO 2014/142451 A1 (FINETEX ENE INC [KR]) 18 September 2014 (2014-09-18) * claims 1,3 * | 7-13 | H01M50/426 H01M50/44 H01M50/489 H01M50/494 |
| A | EP 3 490 031 A1 (BYD CO LTD [CN]) 29 May 2019 (2019-05-29) * claims 1-20 * | 1-15 | H01M10/052 H01M10/0525 |
| A | US 2020/185678 A1 (PARK SANG MOK [KR] ET AL) 11 June 2020 (2020-06-11) * claims 1-19 * | 1-15 | |

**TECHNICAL FIELDS SEARCHED (IPC)**

H01M

The present search report has been drawn up for all claims

| Place of search | Date of completion of the search | Examiner |
|---|---|---|
| The Hague | 9 February 2026 | Reich, Claus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 4202

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2026

| Patent document cited in search report | | Publication date | Patent family member(s) | | Publication date |
|---|---|---|---|---|---|
| EP 3493297 | A1 | 05-06-2019 | CN | 107785519 A | 09-03-2018 |
| | | | EP | 3493297 A1 | 05-06-2019 |
| | | | JP | 6878571 B2 | 26-05-2021 |
| | | | JP | 2019526899 A | 19-09-2019 |
| | | | KR | 20190033090 A | 28-03-2019 |
| | | | US | 2021288381 A1 | 16-09-2021 |
| | | | WO | 2018040904 A1 | 08-03-2018 |
| WO 2014142451 | A1 | 18-09-2014 | NONE | | |
| EP 3490031 | A1 | 29-05-2019 | CN | 107799696 A | 13-03-2018 |
| | | | EP | 3490031 A1 | 29-05-2019 |
| | | | JP | 2019525439 A | 05-09-2019 |
| | | | KR | 20190042576 A | 24-04-2019 |
| | | | US | 2019237732 A1 | 01-08-2019 |
| | | | WO | 2018040903 A1 | 08-03-2018 |
| US 2020185678 | A1 | 11-06-2020 | CN | 111312968 A | 19-06-2020 |
| | | | DE | 102019126576 A1 | 18-06-2020 |
| | | | KR | 20200071932 A | 22-06-2020 |
| | | | KR | 20250042133 A | 26-03-2025 |
| | | | US | 2020185678 A1 | 11-06-2020 |

EPO FORM P0459

For more details about this annex : see Official Journal of the European Patent Office, No. 12/82

## REFERENCES CITED IN THE DESCRIPTION

**Patent documents cited in the description**

- KR 1020240131059
- KR 100775310